# EUROPEAN PATENT SPECIFICATION

(11) **EP 1 774 128 B1**
(45) Date of publication and mention of the grant of the patent: **21.11.2012**
(21) Application number: 05773936.9
(22) Date of filing: 04.07.2005
(51) Int. Cl.: E06B 3/66, E04B 1/80, B32B 3/12

(54) **A HIGHLY THERMO AND ACOUSTIC INSULATING VACUUM PANEL**
HOCH WÄRME- UND SCHALLDÄMPFENDES VAKUUM-ISOLATIONSPANEEL
PANNEAU D'ISOLATION SOUS VIDE HAUTEMENT ISOLANT AU NIVEAU THERMIQUE ET ACOUSTIQUE

(30) Priority: 05.07.2004 IT TO20040455
(43) Date of publication of application: 18.04.2007
(73) Proprietor: Gandini, Luca, 10025 Pino Torinese (Torino) (IT)
(72) Inventor: Gandini, Luca, 10025 Pino Torinese (Torino) (IT)
(74) Representative: Dini, Roberto
(86) International application number: PCT/EP2005/053178
(87) International publication number: WO 2006/003199

(56) References cited:
- EP-A- 1 361 315
- WO-A-02/103127
- WO-A-2004/022898
- WO-A-2004/025064
- GB-A- 1 138 992
- US-A- 4 204 015

## Description

The present invention refers to a vacuum panel with high thermal and acoustic insulating properties, suitable for building walls, partitions and buildings exterior windows.

Vacuum insulation panels (or VIPs) are known in the art; they comprise a depressurized outer covering made of a deformable material (typically a polymeric film impervious to gases) containing and hermetically encapsulating a filler material (corestock) that, according to the thermal performances required, may be aerogel foam, polyurethane foams, porous foam, mineral (silica) powders or stiff open-cells materials.

Patent publication WO 99/314446 discloses the method of impressing indentations into one of the inner surfaces of the panel made of rigid foam or open cell polymer foam in order to provide panels having aesthetically desirable, non-wrinkled surfaces. Other examples of VIP panels are known as disclosed in patent publications WO 03/058113 A1, WO 03/002828 A1, WO 98/29309 and WO 98/01293.

VIP panels are used in several fields, amongst which construction, transport, food industry, cooling and freezing applications. These panels offer good insulating performances but a low mechanical strength. To ensure a long lasting impermeableness of the outer covering, VIP panels should be mounted between two rigid side walls.

The panels of the present invention have some analogies with evacuated glass panels, which include at least two planar glass sheets an a component sealing the peripheral edges of the panel. After applying vacuum, the apace between two planar sheets tends to be squeezed due to the atmospheric pressure. In order to prevent this problem, spacer elements have been disposed and uniformly distributed between the two planar glass sheets so as to resist deformation caused by the atmospheric pressure. As spacer elements, plastic or glass pillars have been used, the pillars being solid (as disclosed in WO 01/23700 A1) or hollow cylinders (as disclosed in WO 2004/025064 A1). Patent publication WO 2004/022898 A1 discloses hollow cylindrical pillars having a notch or opening establishing communication between the inside of the cylindrical spacer pillars and the gap between the glass sheets, thus ensuring a vacuum state also within the pillars and preventing condensation from forming on the inner surfaces of the glass sheets.

Document WO 02/103127 discloses a thermally and acoustically insulating panel, consisting of a honeycomb layer arranged between two sheets; the latter are kept pressed against the honeycomb layer as a result of the vacuum effect created inside the cells thereof. For this purpose the latter are made to communicate with each other by holes or notches and the vacuum in the panel is obtained by sucking air from the cells.

Document GB 1138992 discloses a multi-walled panel unit includes two spaced parallel substantially rigid sheets, whereof the space between the sheets is hermetically sealed and evacuated, and wherein a spacer framework is disposed between the two sheets to sustain them against the inward pressure thereon due to the evacuation, which spacer framework comprises elements of heat-insulating material, forming a large number of individual cells, and the strip elements are apertured to permit communication amongst the cells during evacuation.

Document US 4,204,015 discloses a multi-layered windowpane which is substantially transparent and possesses superior insulating properties. The outer and inner layers are glass and between each glass layer there is a perforated layer of substantially transparent plastic.

Document EP 1361315 discloses a multilayer material comprises plate of insulating honeycomb material sandwiched between two aluminium- or gold-coated skins of low emissivity. The honeycomb material comprises cells of diameter (in the plane of the plate) that is at least twice their height (perpendicular to the plate).

Panels made in accordance with the above mentioned patent publications have several problems during the manufacturing process, since the above mentioned spacers have to be glued to one of the glass sheets to prevent them from being accidentally displaced prior to and during application of the second glass sheet. In addition, a great number of spacers need to be accurately positioned in order to uniformly divide and distribute the stress caused by the external atmospheric pressure on the glass sheets, so as to avoid point of excessive stress on the opposite surfaces of the glass sheets.

Light-transmitting decorative panels are also known having a sandwich structure with an intermediate honeycomb core sealed by two adhesive films to two respective transparent external surfaces. Panels of this kind, known as panelite™, are known, for example, from WO 02/062579 A2. Overall mechanical stiffness of the panel is ensured by the adhesive layers.

In view of the foregoing technical background, the present invention is directed to provide a highly thermally and sound-insulating panel being at the same time light and stiff, capable of being produced on a large scale in a simple and fast way, exploiting already tested production technologies.

This and other objects and advantages are attained, according to the present invention, by a vacuum panel, having the features defined in the appended claims.

A few preferred but non-limiting embodiments of the invention will now be described with reference to the enclosed drawings, in which:
Fig. 1 is a partially sectioned perspective view of a first embodiment of a panel according to the invention;
Fig. 2 is a frontal elevational view of the panel of Fig. 1;
Fig. 3 is a partially sectioned perspective view of a second embodiment of a panel according to the invention; and
Figs. 4 to 8 are partially sectioned perspective views of further embodiments of a panel according to the invention.

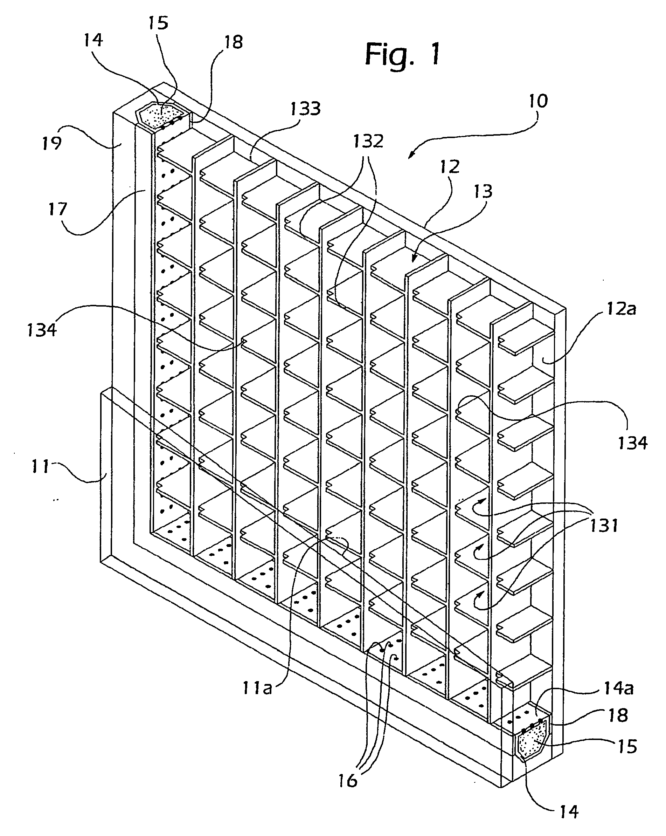

Referring initially to figure 1, a vacuum insulated panel according to the present invention is designated overall 10. Panel 10 has a sandwich structure comprising two outer stiff sheets 11, 12, in this example two planar, parallel sheets made of glass or another transparent material. Interposed between the two planar sheets is an intermediate body or layer 13 having a cellular or "honeycomb" structure defining a multitude of cells 131. The inner, facing surfaces of the outer sheets 11 and 12 are indicated 11a and 12a. The space between the outer sheets 11 and 12, where the intermediate cellular or honeycomb core 13 is located, is vacuum insulated. The honeycomb body 13 keeps the two outer sheets apart from one another and withstands the compressive stress that, owing to the inner vacuum and the external atmospheric pressure, tends to press the two outer panels against one another in the direction herein termed "transversal" or "perpendicular" to the planes of the outer sheets. The cells 131 extend in a direction essentially perpendicular to the outer sheets 11, 12 and have elongate edges 132, 133 contacting the inner opposite surfaces 11a, 12a of sheets 11, 12 in order to uniformly distribute the stress caused by the atmospheric pressure on the external sheets.

Fitted between the peripheral edges of the outer sheets is a rigid peripheral spacer 14, for example an extruded aluminum section, having a closed loop transversal cross-section for containing a granular drying material 15 intended to absorb humidity or/and tablets known as "getters" for absorbing minimum quantities of gas released by the panel components inside the space between the outer sheets 11, 12. This granular material, for instance a silicate-based material, serves to prevent condensation from forming on the inner surfaces 11a, 12a of sheets 11, 12, especially in case these sheets are made of transparent or at least partially transparent material for a panel 10 able to diffuse light. For this purpose a widespread perforation 16 is formed through the wall 14a of the peripheral spacer facing the centre of the panel, in order to put the drying material 15 in fluid communication the intermediate space between sheets 11, 12.

Depending on the kind of application, the outer sheets 11 and 12 may be of transparent or opaque material (glass, aluminum, melaminic laminates, high pressure laminates (HPL), polypropylene laminates). The panel 10 may be a planar panel, as in the illustrated example, or a curved panel according to requirements. Furthermore, the thickness of the intermediate cellular body 13 can be constant, as in the illustrated examples, so that the external sheets 11 and 12 are parallel or equally spaced. As an alternative, the cellular body 13 may have a variable thickness, and as a result the outer sheets 11, 12 will have portions being closer to or farther apart from one another at certain zones.

The peripheral spacer 14 is coupled to the peripheral zones of sheets 11, 12 by means of two adhesive strips 17, 18 made of elastomeric material or silicon or a butylic sealant. A peripheral outer gasket 19, for instance made of a butylic resin or a polyphosphoric bi-component sealant or other material with hermetically sealing properties, is applied in the edge space between the peripheral spacer 14 and the inner facing surfaces 11a, 12a of sheets 11, 12.

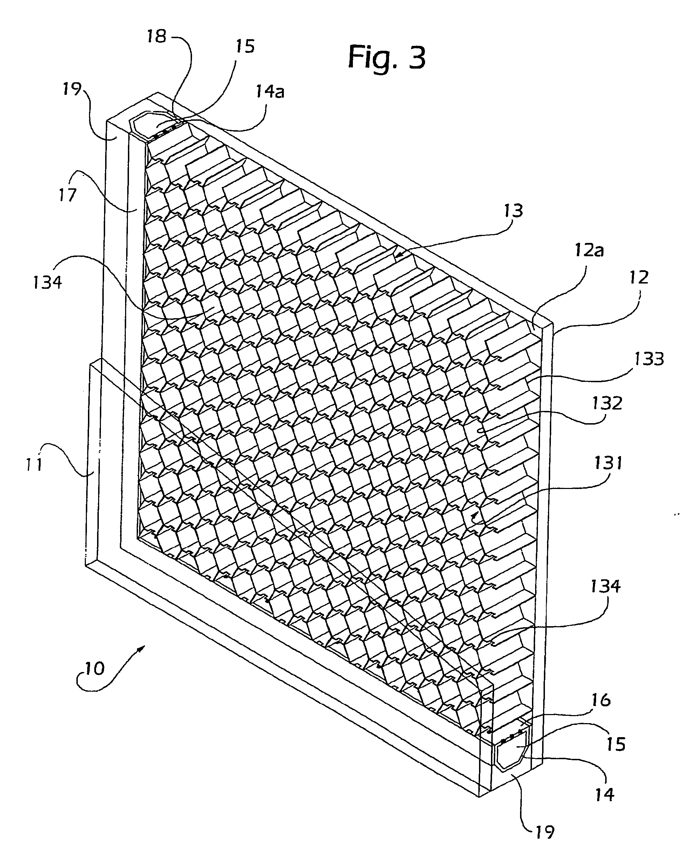

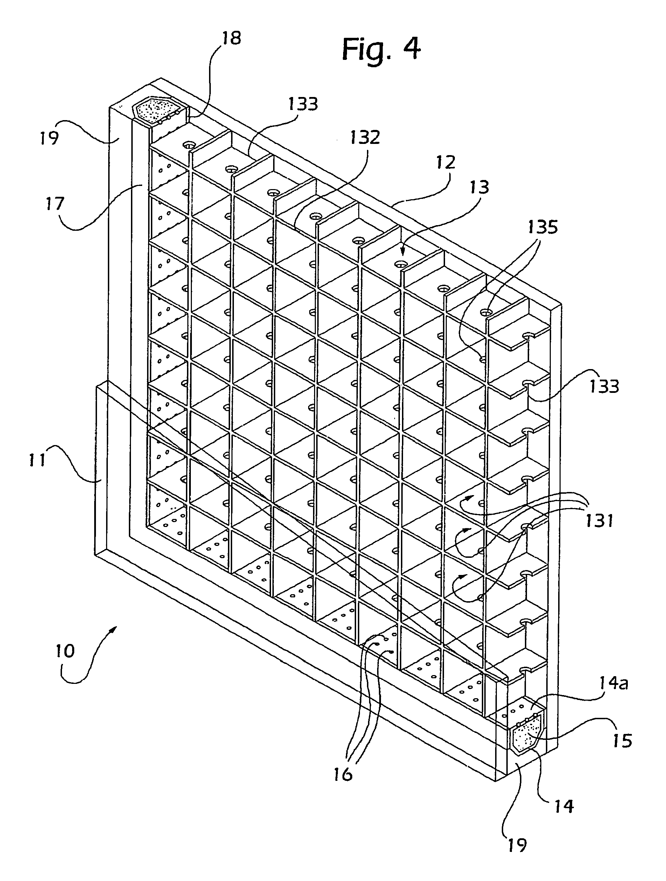

An important feature of the panel according to the invention resides in that the cells 131 of the intermediate cellular body or core 13 are communicating with each other through passages, preferably in the form of notches 134 made by milling the edges 132 and/or 133 of the cells 131. In the assembled condition shown in figures 1 and 3, the cells are in contact with the inner surfaces 11a, 12a of the outer sheets 11, 12. Alternatively, as illustrated in fig. 4, these intercommunicating passages can be for instance holes 135 made through the wall of the structure or cellular core 13. The passages 134 and 135 are aligned along parallel directions, since they are made by milling or drilling machines, or, alternatively, by corresponding protrusions of a mold.

As will be appreciated, the edges 132 and 133 of cells 131 define contact surfaces uniformly arranged on the outer sheets to distribute thereon stresses deriving from the external atmospheric pressure without concentrations or local peaks of stress.

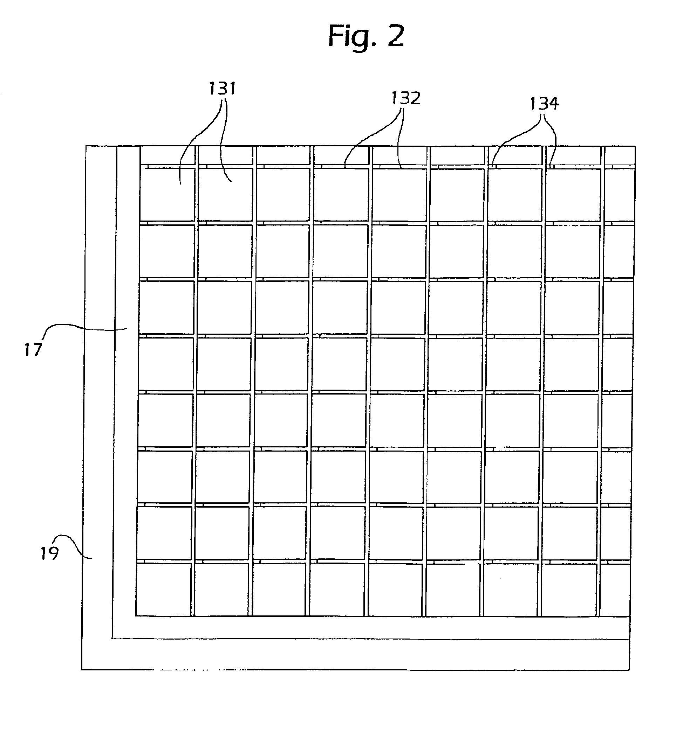

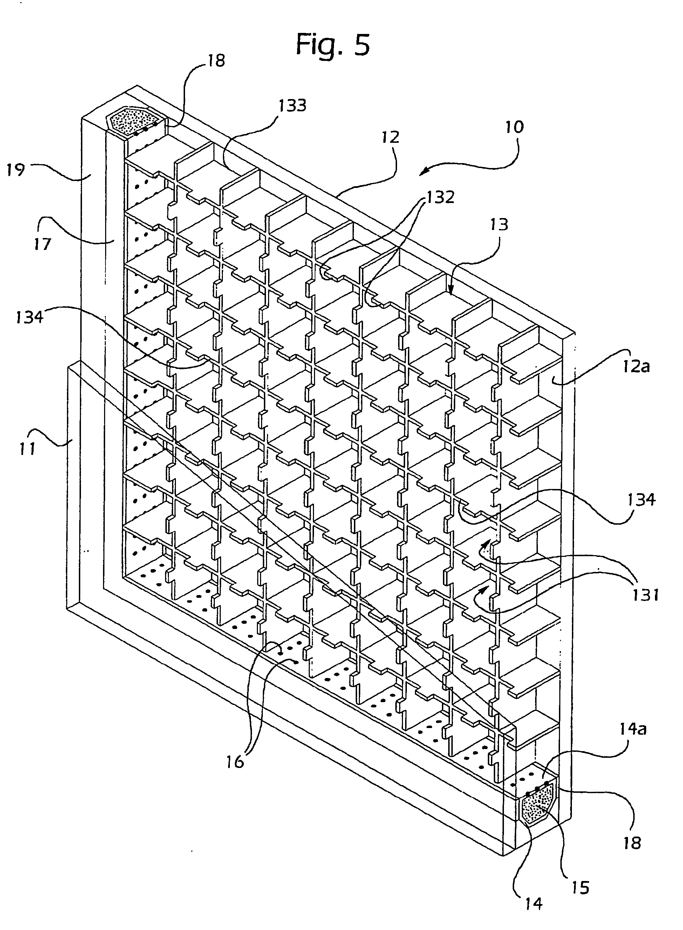

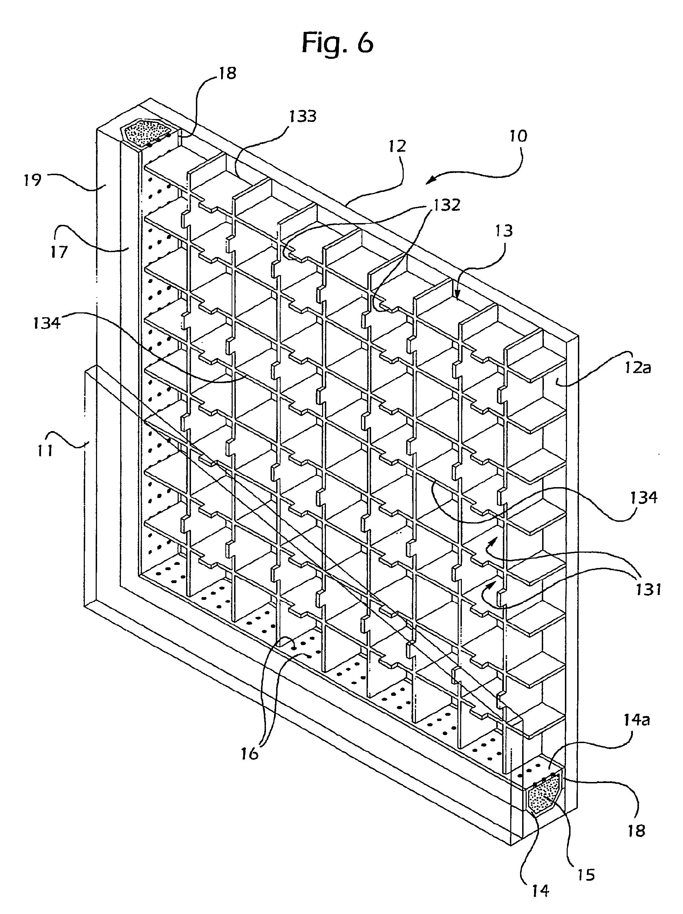

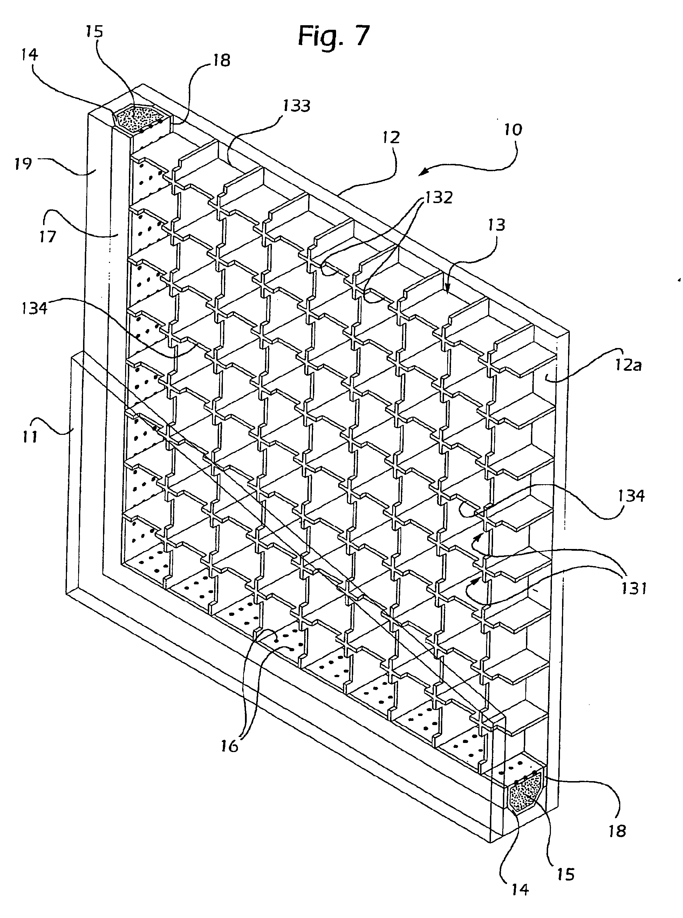

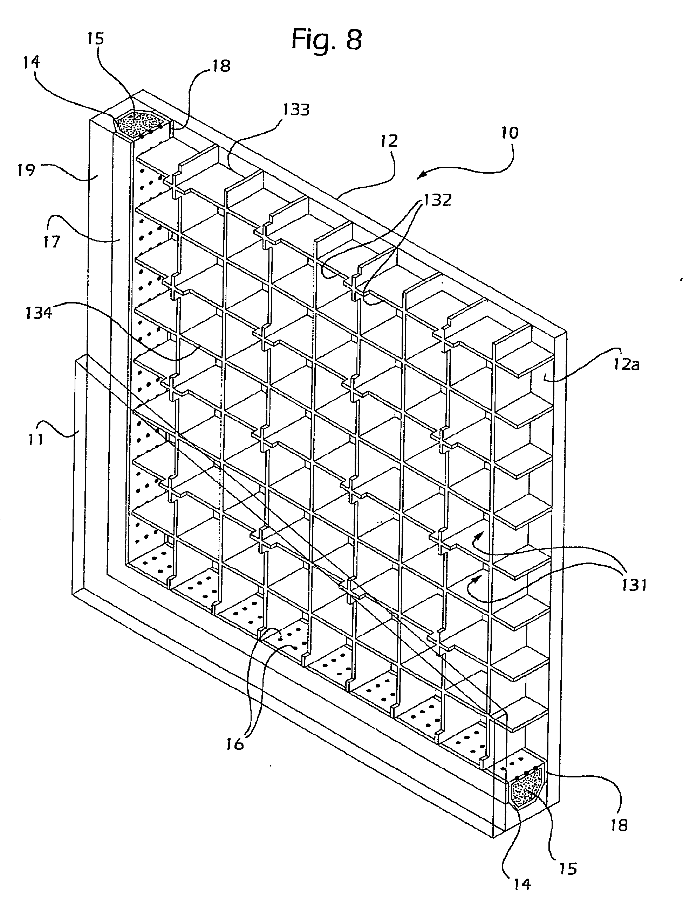

The cells may indifferently have polygonal shapes (square, as shown in figs. 1 and 2, rectangular or hexagonal as shown in fig. 3) or rounded shapes (circular, oval, etc.). The intermediate cellular body may have cells open towards both the outer sheets 11, 12, as shown in the drawings, or cells closed on one side and so similar to honeycomb receptacles. In the variants of figures 5 to 8, the notches 134 are of a length greater than that of figures 1 to 3.

In the case of open cells as shown, it is possible to suitably vary the depth of the cells with respect to the size of their openings. It is possible to provide a panel which, once oriented in a vertical plane, will let the light come in directly from the outside when sun rays have a small inclination on the horizontal axis. In this way, during the winter or when the sun is not so high in the sky or there is a greater need of heat it is possible to provide more heat to a building. On the other hand, when the sun is high in the sky, sunlight can be filtrated by the cellular body 13. The transversal thickness of the cellular body 13 can also be considerably reduced, in order to have a cellular body more like a grid.

Regardless of the thickness of cellular body and the geometrical shape of its cells, the vacuum in the intermediate space between sheets 11, 12 and within the intercommunicating cells 131 causes the atmospheric pressure to compress the two outer sheets against the intermediate cellular body 13, thus making the panel 10 a single, stiff and light body, ideal for the construction of interior and exterior walls of buildings.

The cellular body 13 may be made of any light metallic or stiff plastic material capable of opposing a sufficient resistance to flattening in a direction that is transversal or perpendicular to the planes of the outer sheets. Such a material can be chosen for instance amongst aluminum, nomex™, polycarbonate, polystyrene, acrylic, etc.

The manufacturing process of the panel according to the present invention shows many analogies with the traditional processes of producing double glazing windows as far as the application of the sealing external structure is concerned. This is the reason why these manufacturing phases of the panel object of this invention are not illustrated here in detail. For details of the manufacturing process it is possible to refer to any already known process of manufacturing double glazed windows. Suffice it here to say that after having positioned the intermediate layer 13 between the outer sheets 11, 12, the peripheral structure with its spacer 14 and the sealing elements 17, 18, 19 is fitted. The next step is the evacuation of the panel through a point in the peripheral structure. Finally, the suction point is hermetically sealed with an injection of a sealing component. Optionally, it is possible to fit a vacuum valve (not shown) in the peripheral structure to evacuate the inside of the panel.

Therefore it will be appreciated that the panel according to the present invention makes good use of already tested efficient techniques and could then be immediately produced in the double-glazing industry without the need of a preliminary phase of technical development of the design.

As an alternative to the illustrated solution, the adhesive strips 17, 18 can be eliminated and the external edges of the panel can be sealed with a single gasket. In addition, the gasket can possibly form portions interposed between the sides of the peripheral spacer 14 and the inner surfaces 11a, 12a of the sheets 11, 12.

It is also evident that the choice to use single sheets to provide the outer layers represents, especially in some applications, a preferred choice but not a binding solution for the implementation of the invention. Particularly, each one of the two outer layers could be made of two or more glass sheets with the interposition of a plastic material (PVB) sheet, like in safety glasses.

It should be noted that the present invention is not limited to embodiments herein described and illustrated, which are to be considered as implementing examples of the panel. Rather, the invention is susceptible of modifications regarding the shape, dimensions and arrangement of parts, constructional details and employed materials.

## Claims

1. A vacuum and high thermo and sound-insulating panel for walls of buildings, comprising in combination:
- a sandwich structure (11, 12, 13) comprising
- two outer stiff sheets (11, 12) with facing inner surfaces (11a, 12a) defining a vacuum intermediate space between them,
- spacer means (13) interposed between the two outer sheets in the intermediate space;
- sealing means (14, 17, 18) disposed along the edges of the outer sheets for sealing said vacuum space;
said spacer means comprise an intermediate cellular body (13) having cells (131) extending in a direction essentially perpendicular to the outer sheets (11, 12),
the cells (131) have extended edges (132, 133) in contact with the inner opposite surfaces (11a, 12a) for uniformly distributing stress caused by the atmospheric pressure on the outer sheets (11, 12),
the cells (131) are intercommunicating through passages (134, 135) formed in the cellular body (13),
said panel being **characterized by** further comprising a stiff peripheral spacer (14) interposed between peripheral edges of the inner surfaces (11a, 12a) of the outer sheets (11, 12), the stiff peripheral spacer (14) forming a peripheral chamber (16) intercommunicating with said intermediate space and containing a drying material (15) or a material for absorbing small amounts of gas.

2. A panel according to claim 1, **characterized in that** the passages (134) are in the form of notches formed in said edges (132 or/and 133) of the cells (131) and contacting at least one of the inner surfaces (11a, 12a) of at least one of the outer sheets (11, 12).

3. A panel according to claim 1, **characterized in that** the intercommunicating passages (135) are in the form of openings formed through two adjacent cells (131).

4. A panel according to any one of the preceding claims, **characterized in that** the passages (134 or 135) are aligned along parallel directions.

5. A panel according to claim 1, **characterized in that** the outer sheets (11, 12) are made of an at least partially transparent material.

6. A panel according to claim 5, **characterized in that** the cells (131) are open on both opposite sides facing the inner surfaces (11a, 12a) of the outer sheets (11, 12).

7. A panel according to any one of claims 1 to 5, **characterized in that** the cells (131) have the shape of honeycomb receptacles with a closed side facing one of the inner surfaces (11a, 12a) of the outer sheets (11, 12).

8. A panel according to claim 1, **characterized in that** said sealing means comprise at least one peripheral gasket (19) applied in an edge space defined between the peripheral spacer (14) and the inner facing surfaces (11a, 12a) of the outer sheets (11, 12).

9. A panel according to claim 1, **characterized in that** the peripheral spacer (14) is coupled to the outer sheets (11,12) by means of adhesive strips (17, 18).

10. A panel according to claim 1, **characterized in that** the thickness of the intermediate cellular body (13) is constant and that the distance between the outer sheets (11, 12) is correspondingly constant.

11. A panel according to claim 1, **characterized in that** the thickness of the intermediate cellular body (13) is variable in a gradual manner, and that the distance between the outer sheets (11, 12) is correspondingly variable.

12. A panel according to claim 1, **characterized in that** the intermediate cellular body (13) is not coupled by means of any adhesive to the outer sheets (11, 12).

## Patentansprüche

1. Vakuum- und hochwärme- und schalldämmendes Paneel für Gebäudewände, in Kombination umfassend:
- eine Sandwich-Struktur (11, 12, 13) umfassend:
- zwei äußere steife Platten (11, 12) mit gegenüberliegenden inneren Oberflächen (11a, 12a), welche einen Vakuumzwischenraum zwischen sich definieren,
- Abstandsmittel (13), welche zwischen den zwei äußeren Platten in dem Zwischenraum angeordnet sind;
- Dichtungsmittel (14, 17, 18), welche entlang der Kanten der äußeren Platten zum Abdichten des Vakuumraums angeordnet sind;
wobei die Abstandsmittel einen Zwischenzellkörper (13) umfassen, welcher Zellen (131) aufweist, die sich in einer Richtung im Wesentlichen senkrecht zu den äußeren Platten (11, 12) erstrecken,
die Zellen (131) haben überstehende Kanten (132, 133), die sich in Kontakt mit den inneren gegenüberliegenden Oberflächen (11a, 12a) befinden, um die Belastung, die vom atmosphärischen Druck verursacht wird, gleichmäßig auf die äußeren Platten (12, 13) zu verteilen,
die Zellen (131) kommunizieren mittels Durchgängen (134, 135) miteinander, die im Zellkörper (13) ausgebildet sind,
wobei das Paneel **dadurch gekennzeichnet ist, dass** es ferner einen steifen peripheren Abstandhalter (14) umfasst, der zwischen den peripheren Kanten der inneren Oberflächen (11a, 12a) der äußeren Platten (11, 12) angeordnet ist, wobei der steife periphere Abstandhalter (14) eine periphere Kammer (16) ausbildet, welche mit dem Zwischenraum kommuniziert und ein trockenes Material (15) oder ein Material zum Absorbieren kleiner Mengen von Gas beinhaltet.

2. Paneel nach Anspruch 1, **dadurch gekennzeichnet, dass** die Durchgänge (134) in der Form von Aussparungen in den Kanten (132 oder/und 133) der Zellen (131) ausgebildet sind und mindestens eine der inneren Oberflächen (11a, 12a) von mindestens einer der äußeren Platten (11, 12) berühren.

3. Paneel nach Anspruch 1, **dadurch gekennzeichnet, dass** die miteinander kommunizierenden Durchgänge (135) in der Form von Öffnungen durch zwei benachbarte Zellen (131) ausgeführt sind.

4. Paneel nach einem der vorstehenden Ansprüche, **dadurch gekennzeichnet, dass** die Durchgänge (134 oder 135) entlang paralleler Richtungen angeordnet sind.

5. Paneel nach Anspruch 1, **dadurch gekennzeichnet, dass** die äußeren Platten (11, 12) aus einem zumindest teilweise transparenten Material bestehen.

6. Paneel nach Anspruch 5, **dadurch gekennzeichnet, dass** die Zellen (131) auf beiden gegenüberliegenden Seiten offen sind, welche den inneren Oberflächen (11a, 12a) der äußeren Platten (11, 12) gegenüberliegen.

7. Paneel nach einem der Ansprüche 1 bis 5, **dadurch gekennzeichnet, dass** die Zellen (131) die Form von Bienenwabenbehältern mit einer geschlossenen Seite haben, die einer der inneren Oberflächen (11a, 12a) der äußeren Platten (11, 12) gegenüberliegt.

8. Paneel nach Anspruch 1, **dadurch gekennzeichnet, dass** die Dichtungsmittel mindestens eine periphere Dichtung (19) umfassen, welche in einem Kantenraum, der zwischen dem peripheren Abstandshalter (14) und den inneren gegenüberliegenden Oberflächen (11a, 12a) der äußeren Platten (11, 12) definiert ist, angeordnet ist.

9. Paneel nach Anspruch 1, **dadurch gekennzeichnet, dass** der periphere Abstandshalter (14) durch adhäsive Streifen (17, 18) mit den äußeren Platten (11, 12) gekoppelt ist.

10. Paneel nach Anspruch 1, **dadurch gekennzeichnet, dass** die Dicke des Zwischenzellkörpers (13) konstant ist und dass, dazu korrespondierend, der Abstand zwischen den äußeren Platten (11, 12) konstant ist.

11. Paneel nach Anspruch 1, **dadurch gekennzeichnet, dass** die Dicke des Zwischenzellkörpers (13) stufenweise variabel ist und dass, dazu korrespondierend, der Abstand zwischen den äußeren Platten (11, 12) stufenweise variabel ist.

12. Paneel nach Anspruch 1, **dadurch gekennzeichnet, dass** der Zwischenzellkörper (13) nicht durch Klebstoff mit den äußeren Platten (11, 12) gekoppelt ist.

## Revendications

1. Panneau d'isolation sous vide et hautement isolant au niveau thermique et acoustique destiné à des parois de bâtiments, comportant en combinaison :
- une structure en sandwich (11, 12, 13) comprenant :
- deux plaques rigides extérieures (11, 12) dotées de surfaces intérieures opposées (11a, 12a) définissant entre elles un espace intermédiaire sous vide,
- des moyens d'écartement (13) interposés entre les deux plaques extérieures dans l'espace intermédiaire ;
- des moyens d'étanchéité (14, 17, 18) disposés le long des bords des plaques extérieures pour fermer de façon étanche ledit espace sous vide ;
lesdits moyens d'écartement comprennent un corps cellulaire intermédiaire (123) comportant des cellules (131) s'étendant dans une direction essentiellement perpendiculaires aux plaques extérieures (11, 12),
les cellules (131) présentent des bords étendus (132, 133) en contact avec les surfaces intérieures opposées (11a, 12a) pour répartir de façon uniforme la contrainte exercée par la pression atmosphérique sur les plaques extérieures (11, 12),
les cellules (131) communiquent entre elles par des passages (134, 135) formés dans le corps cellulaire (13), ledit panneau étant **caractérisé par** le fait de comporter, de plus, une pièce d'écartement périphérique rigide (14) interposée entre les bords périphériques des surfaces intérieures (11a, 12a) des plaques extérieures (11, 12), la pièce d'écartement rigide périphérique (14) formant une chambre périphérique (16) communiquant avec ledit espace intermédiaire et contenant un matériau de séchage (15) ou un matériau pour absorber de petites quantités de gaz.

2. Panneau selon la revendication 1, **caractérisé en ce que** les passages (134) se présentent sous la forme de rainures formées dans lesdits bords (132 ou/et 133) des cellules (131) et se trouvant au contact d'au moins l'une des surfaces intérieures (11a, 12a) d'au moins l'une des plaques extérieures (11, 12).

3. Panneau selon la revendication 1, **caractérisé en ce que** les passages communiquant entre eux (135) se présentent sous la forme d'ouvertures formées à travers deux cellules adjacentes (131).

4. Panneau selon l'une quelconque des revendications précédentes, **caractérisé en ce que** les passages (134 ou 135) sont alignés le long de directions parallèles.

5. Panneau selon la revendication 1, **caractérisé en ce que** les plaques extérieures (11, 12) sont constituées d'un matériau au moins partiellement transparent.

6. Panneau selon la revendication 5, **caractérisé en ce que** les cellules (131) sont ouvertes sur les deux côtés opposés faisant face aux surfaces intérieures (11a, 12a) des plaques extérieures (11, 12).

7. Panneau selon l'une quelconque des revendications 1 à 5, **caractérisé en ce que** les cellules (131) présentent la forme de réceptacles en nid d'abeille avec un côté fermé faisant à l'une des surfaces intérieures (11a, 12a) des plaques extérieures (11, 12).

8. Panneau selon la revendication 1, **caractérisé en ce que** lesdits moyens d'étanchéité comprennent au moins une garniture d'étanchéité périphérique (19) appliquée dans un espace de bordure défini entre la pièce d'écartement périphérique (14) et les surfaces intérieures opposées (11a, 12a) des plaques extérieures (11, 12).

9. Panneau selon la revendication 1, **caractérisé en ce que** la pièce d'écartement périphérique (14) est couplée aux plaques extérieures (11, 12) au moyen de bandes adhésives (17, 18).

10. Panneau selon la revendication 1, **caractérisé en ce que** l'épaisseur du corps cellulaire intermédiaire (13) est constante et **en ce que** la distance entre les plaques extérieures (11, 12) est constante de façon correspondante.

11. Panneau selon la revendication 1, **caractérisé en ce que** l'épaisseur du corps cellulaire intermédiaire (13) est variable d'une manière progressive, et **en ce que** la distance entre les plaques extérieures (11, 12) est variable de façon correspondante.

12. Panneau selon la revendication 1, **caractérisé en ce que** le corps cellulaire intermédiaire (13) n'est pas couplé au moyen d'un adhésif quelconque aux plaques extérieures (11, 12).
